# DEMANDE DE BREVET EUROPEEN

(11) **EP 0 681 783 A1**
(43) Date de publication de la demande: **15.11.1995**
(21) Numéro de dépôt: 95400968.4
(22) Date de dépôt: 27.04.1995
(51) Int. Cl.: A01K 61/00

(54) **Cage pour l'élevage des coquillages et notamment des huîtres**

(30) Priorité: 11.05.1994 FR 9405832
(71) Demandeur: LES VERGERS DE L'ATLANTIQUE, F-17320 Marennes (FR)
(72) Inventeur: Menadier, Michel, F-17530 Arvert (FR)
(74) Mandataire: Polus, Camille

(57) **Abrégé**

L'invention est relative à une cage pour l'élevage des coquillages. Elle comprend plusieurs compartiments (15) destinés à recevoir chacun une poche (8) de coquillages, un axe (3, 4) de rotation reposant sur un support (17) et des moyens (19, 25, 26) de blocage en position de ladite cage (1).

Cette cage s'applique à l'ostréiculture.

## Description

La présente invention est relative à une cage pour l'élevage des coquillages et notamment des huîtres.

Il est d'usage courant, pour l'élevage des huîtres, de mettre les jeunes huîtres dans des sacs ou poches. Ces poches sont posées alors à plat sur une table en fer reposant sur le fond marin et l'élevage des huîtres dure deux à trois ans. Mais, pour assurer la croissance de ces huîtres, il est impératif de tourner et retourner régulièrement ces poches, de 15 à 20 fois avant que l'huître n'atteigne sa taille de commercialisation. Cette méthode d'élevage nécessite par conséquent beaucoup de manutention, et le travail des ostréiculteurs dépend des marées, puisque la manutention de ces poches ne peut se faire qu'à marée basse.

L'invention a pour but d'éviter ces inconvénients en proposant une cage qui permet de retourner facilement et rapidement de grandes quantités de coquillages, tout en s'affranchissant du niveau des marées et ce par des moyens simples, fiables et peu coûteux.

A cet effet, l'invention a pour objet une cage pour l'élevage des coquillages et notamment des huîtres, caractérisée en ce qu'elle comprend plusieurs compartiments destinés à recevoir chacun une poche de coquillages, un axe de rotation reposant sur un support et des moyens de blocage en position de ladite cage.

La cage suivant l'invention peut comporter une ou plusieurs des caractéristiques suivantes :
- les parois extérieures de la cage et celles des compartiments sont formées par un treillis à larges mailles destinées à permettre un libre échange entre l'intérieur de la cage et le milieu environnant ;
- la cage est de forme sensiblement parallélépipèdique, son axe de rotation s'étendant selon l'une de ses dimensions, et de part et d'autre de ses côtés ;
- chaque compartiment comporte des moyens d'ouverture et de fermeture pour l'introduction et le retrait des poches ;
- les moyens de blocage en position comprennent une tige destinée à être insérée au travers, d'une part, d'un oeillet ou d'un trou ménagé sur le support et, d'autre part, d'un oeillet solidaire de la cage ;
- le support comprend un berceau de forme sensiblement en V destiné à recevoir libre en rotation chacune des deux extrémités de l'axe de rotation de ladite cage ;
- chaque berceau est solidaire d'une structure formant des pieds reliés entre eux par des tiges de liaison et, destinés à reposer sur le fond marin.
- chaque berceau est solidaire d'une poutre verticale, reliée à l'autre poutre par une structure porteuse suspendue au-dessous d'une filière supportée par des bouées flottant à la surface de l'eau, la distance séparant chaque berceau de la structure porteuse étant supérieure à la distance séparant l'axe de rotation du bord de la cage le plus éloigné dudit axe de rotation ;
- le support comprend deux poutres verticales rainurées dans lesquelles chacune des deux extrémités de l'axe de rotation est positionnée à coulissement, et qui sont solidaires d'une structure support en forme de cadre comprenant des poutres à large section destinées à reposer sur le fond marin ;
- l'axe de rotation de ladite cage coopère avec des moyens d'entraînement en rotation.

Des exemples de réalisation de l'invention vont maintenant être décrits en regard des dessins annexés, sur lesquels :
- La Fig. 1 est une vue de face d'une cage suivant l'invention sans son support ;
- la Fig. 2 est une vue de dessus de cette même cage ;
- la Fig. 3 est une vue de côté de cette cage;
- la Fig. 4 est une vue en perspective de la cage avec son support, selon un premier mode de réalisation suivant l'invention ;
- la Fig. 5 est une vue en perspective de la cage avec son support selon un second mode de réalisation de l'invention ;
- la Fig. 6 est une vue en perspective de la cage avec son support selon un troisième mode de réalisation de l'invention.

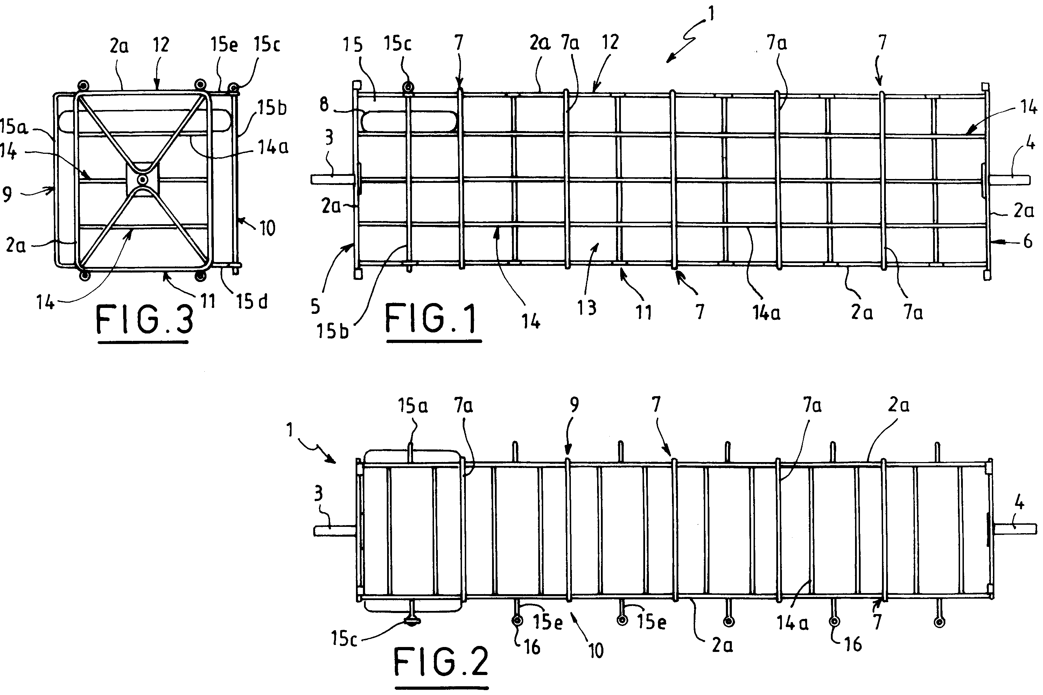

Les figures 1 à 3 montrent une cage désignée dans son ensemble par la référence 1, de forme parallélépipèdique à base carrée. Cette cage 1 est munie d'un axe de rotation dont les deux extrémités portant les références 3 et 4, s'étendent de part et d'autre des côtés latéraux 5 et 6.

Les côtés latéraux 5 et 6 et les côtés longitudinaux 9, 10, 11 et 12 de la cage 1 sont formés par des barreaux 2a.

La cage 1 est divisée, d'une part, par des cloisons intermédiaires 7 verticales et parallèles aux côtés latéraux 5 et 6 et, d'autre part, par des cloisons intermédiaires 14 horizontales et parallèles aux côtés inférieur 11 et supérieur 12 pour former des compartiments 15 dans lesquels sont insérées les poches 8 d'huîtres.

Les cloisons intermédiaires 7 et 14 sont formées par des barreaux respectivement 7a et 14a.

Ainsi, les barreaux 2a, 7a et 14a forment un treillis 13 dont les mailles sont suffisamment larges pour permettre un échange entre l'intérieur de la cage 1 et son milieu environnant.

Les barreaux 7a sont régulièrement espacés d'une distance légèrement supérieure à la largeur des poches 8 et les barreaux 14a sont régulièrement espacés d'une distance légèrement supérieure à la hauteur desdites poches 8.

Le fond de chaque compartiment 15 est obturé par des barreaux verticaux 15a et l'entrée de chacun desdits compartiments 15 comporte des moyens d'ouverture et de fermeture de ces compartiments.

Ces moyens d'ouverture et de fermeture sont pas exemple constitués par des tiges verticales 15b portant des oeillets 15c à leurs extrémités supérieures.

Ces tiges 15b sont maintenues par des barres horizontales 15d, 15e respectivement solidaires des barreaux 2a des côtés inférieur 11 et supérieur 12, les barres 15d, 15e portant à leurs extrémités des oeillets 16 de diamètres internes légèrement supérieurs au diamètre des tiges 15b, qui peuvent ainsi y être insérées.

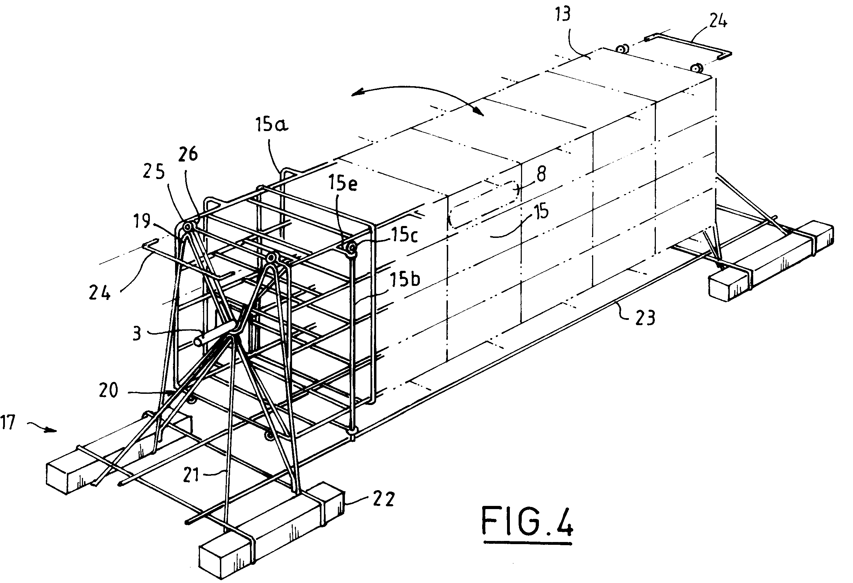

Cette cage 1 repose par son axe de rotation 3, 4 sur un support 17 qui peut prendre différentes formes selon les modes de réalisation représentés aux figures 4 à 6.

La Fig. 4 représente un premier mode de réalisation de l'invention. Le support 17 est constitué par un berceau 19 et par une structure 20 formant des pieds 22. Le berceau 19 est de forme sensiblement en "V" et est destiné à recevoir libre en rotation chacune des deux extrémités 3 et 4 de l'axe de rotation de la cage 1. Ce berceau 19 est fixé au-dessus de la structure 20 qui est destinée à reposer sur le fond marin grâce aux pieds 22. Cette structure 20 est constituée de tiges 21 reliées entre elles de manière à définir une forme pyramidale.

Les deux structures 20 de part et d'autre de la cage sont reliées entre elles par deux tiges 23 s'étendant longitudinalement au-dessous de la cage 1.

La cage 1 est immobilisée en rotation grâce à une tige 24 de forme sensiblement en "U" qui est destinée à être insérée au travers, d'une part, de deux oeillets 25 fixés aux sommets du berceau 19 en V et, d'autre part, de deux oeillets 26 fixés sur le cadre de la cage 1.

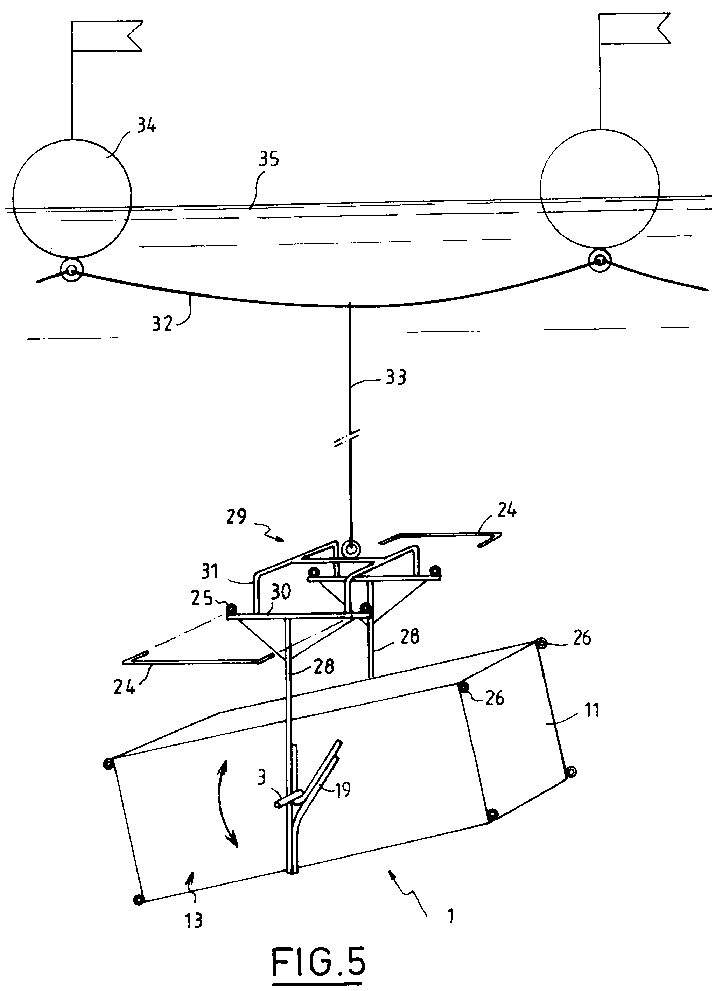

Sur la Fig. 5 est représenté un second mode de réalisation de l'invention.

L'axe de rotation 3, 4 s'étend maintenant latéralement par rapport à la cage 1. Le support 17 est constitué des mêmes berceaux 19 et de deux poutres verticales 28 et d'une structure porteuse 29.

Un des côtés du V des berceaux 19 est relié à une des poutres verticales 28 qui est elle même reliée à l'autre poutre verticale 28 solidaire de l'autre berceau 19 par la structure porteuse 29.

Cette structure porteuse 29 est elle même constituée par deux poutres horizontales 30 reliées entre elles par une structure en "I" 31. L'axe de rotation 3, 4 passe ici par le centre de gravité de la cage 1. La distance séparant le fond du berceau 19 de la structure porteuse 31 est supérieure ou égale à la moitié de la longueur de la cage.

La structure porteuse 31 est elle même suspendue sous une filière 32 par l'intermédiaire d'un câble 33. La filière 32 est maintenue entre deux eaux par des bouées 34 flottant à la surface de la mer 35. Le blocage en rotation de la cage 1 par rapport au support 17 est réalisé par les mêmes moyens que dans le mode de réalisation précédent.

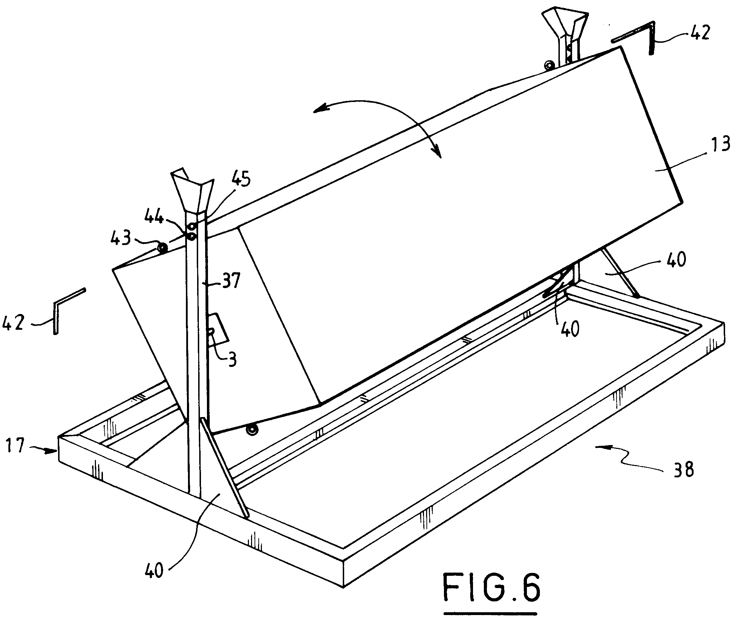

La Fig. 6 représente un troisième mode de réalisation de l'invention. Le support 17 est maintenant constitué par deux poutres verticales rainurées 37 qui sont fixées perpendiculairement à une structure support 38 horizontale destinée à être posée sur le fond marin. Les poutres 37 sont rainurées sur leur moitié supérieure de façon à recevoir en coulissement les deux extrémités de l'axe 3, 4 de rotation de la cage 1.

La structure support 38 est un cadre rectangulaire constitué par des poutres à section très large pour empêcher l'enfoncement de l'ensemble dans des fonds marins mous. L'intérieur du cadre de la structure support 38 est muni d'une poutre s'étendant longitudinalement. La liaison entre les poutres 37 et le cadre support 38 est renforcée par des équerres 40. L'immobilisation en rotation de la cage 1 par rapport au support 17 est réalisée par une tige équerre 42 insérée dans un trou 44 ménagé à l'extrémité supérieure de la poutre 37 et dans un oeillet 43 fixé sur le côté de la cage 1.

Les extrémités supérieures des poutres 37 sont munies d'un deuxième trou 45 pour permettre de sortir l'ensemble cage 1 et supports 17 hors de la mer.

L'ensemble cage 1 et supports 17 est, dans tous les modes réalisation décrits ci-dessus, réalisé en un matériau tel que l'aluminium, l'acier inoxydable ou le fer qui peut éventuellement être recouvert d'une couche d'époxy plastique anti-algues.

Pour retourner les huîtres, une fois que leur croissance le permet, il suffit, pour le premier mode de réalisation, d'attendre que le niveau de la marée baisse pour pouvoir atteindre la cage 1. Ensuite l'ostréiculteur ôte la tige 19 et fait tourner d'un demi-tour la cage 1 autour de son axe de rotation 3, 4 et insère à nouveau la tige 19 dans les oeillets 25 et 26.

Dans le deuxième mode de réalisation, la manipulation des huîtres est indépendante du niveau de la mer. Il suffit grâce à la filière 32 de relever la cage 1 par l'intermédiaire du câble 33 puis de faire effectuer une demi-tour à la cage 1 autour de son axe de rotation 3, 4.

Dans le dernier mode de réalisation représenté à la Fig. 5, la manipulation des huîtres peut se faire lorsque la marée est basse ou bien encore à marée haute en relevant l'ensemble cage 1 et supports 17, puis en faisant faire un demi-tour à la cage 1 après avoir retirer la tige équerre 42.

Bien que dans ces modes de réalisation, il n'a pas été représenté des moyens d'entraînement en rotation de l'axe 3, 4, il est tout à fait concevable de disposer une manivelle ou un moteur étanche sur le support 17 pour mettre en rotation l'axe 3, 4 au moment voulu.

Il apparait clairement à partir de cette description, que la manipulation des huîtres est grandement facilitée puisque en une seule opération, de très nombreuses huîtres sont retournées rapidement et sans effort, ce qui permet d'obtenir un prix de revient bien inférieur au système actuel.

Cette solution apporte également une amélioration à l'élevage des huîtres puisque leur coquille est plus dure et de forme plus régulière et ces huîtres sont mieux oxygénées, leur qualité est ainsi accrue.

## Revendications

1. Cage pour l'élevage de coquillages et notamment des huîtres, caractérisée en ce qu'elle comprend plusieurs compartiments (15) destinés à recevoir chacun une poche (8) de coquillages, un axe (3, 4) de rotation reposant sur un support (17) et des moyens de blocage en position (24, 25, 26 ; 42, 43, 44) de ladite cage (1).

2. Cage selon la revendication 1, caractérisée en ce que les côtés latéraux (5, 6) les parois extérieures (9, 10, 11, 12) et celles des compartiments (15) sont formées par un treillis (13) à larges mailles destinées à permettre un libre échange entre l'intérieur de la cage (1) et le milieu environnant.

3. Cage selon la revendication 1 ou 2, caractérisée en ce qu'elle est de forme sensiblement parallélépipèdique, son axe (3, 4) de rotation s'étendant selon l'une de ses dimensions, et de part et d'autre de ses côtés latéraux (5, 6).

4. Cage selon l'une quelconque des revendications 1 à 3, caractérisée en ce que chaque compartiment (15) comporte des moyens d'ouverture et de fermeture (15b, 15c, 15d, 15e, 16) pour l'introduction et le retrait des poches (8).

5. Cage selon l'une quelconque des revendications 1 à 4, caractérisée en ce que les moyens (19, 25, 26 ; 42, 43, 44) de blocage en position comprennent une tige (24 ; 42) destinée à être insérée au travers, d'une part, d'un oeillet (25) ou d'un trou ménagé (44) sur le support (17) et, d'autre part, d'un oeillet (26 ; 43) solidaire de ladite cage (1).

6. Cage selon l'une quelconque des revendications 1 à 5, caractérisée en ce que le support (17) comprend un berceau (19) de forme sensiblement en V destiné à recevoir libre en rotation chacune des deux extrémités (3, 4) de l'axe de rotation de ladite cage (1).

7. Cage selon la revendication 6, caractérisée en ce que chaque berceau (19) est solidaire d'une structure (20) formant des pieds (22) reliés entre eux par des tiges de liaison (23) et destinés à reposer sur le fond marin.

8. Cage selon la revendication 6, caractérisée en ce que chaque berceau (19) est solidaire d'une poutre verticale (28) reliée à l'autre poutre (28) par une structure porteuse (29) suspendue au-dessous d'une filière (32) supportée par des bouées (33) flottant à la surface (35) de l'eau, la distance séparant chaque berceau (19) de la structure porteuse (29) étant supérieure à la distance séparant l'axe (3, 4) de rotation du bord (11) de la cage (1) le plus éloigné dudit axe (3, 4) de rotation.

9. Cage selon l'une quelconque des revendications 1 à 5, caractérisée en ce que le support (17) comprend deux poutres verticales (37) rainurées dans lesquelles sont positionnées à coulissement les deux extrémités de l'axe (3, 4) de rotation, et qui sont solidaires d'une structure support (38) en forme de cadre et comprenant des poutres à large section destinées à reposer sur le fond marin.

10. Cage selon l'une quelconque des revendications 1 à 9, caractérisée en ce que l'axe (3, 4) de rotation coopère avec des moyens d'entraînement en rotation de ladite cage (1).
